# EUROPÄISCHE PATENTSCHRIFT

(11) **EP 0 947 665 B1**
(45) Veröffentlichungstag und Bekanntmachung des Hinweises auf die Patenterteilung: **21.06.2006**
(21) Anmeldenummer: 99105650.8
(22) Anmeldetag: 19.03.1999
(51) Int. Cl.: E21B 41/00, E21B 4/00

(54) **Maschinenelement mit Hydraulikfüllung, insbesondere Lager oder Welle**
Machine element with hydraulic filling, especially bearing or rotating shaft
Elément de machine avec remplissage hydraulique, en particulier palier ou arbre tournant

(30) Priorität: 31.03.1998 DE 19814214
(43) Veröffentlichungstag der Anmeldung: 06.10.1999
(73) Patentinhaber: Renk Aktiengesellschaft, 86159 Augsburg (DE)
(72) Erfinder: Bohmann, Heinz-Jürgen, 48454 Witten (DE); Brandt, Helmut, 45549 Sprockhövel (DE); Floren, Ansgar, 58093 Hagen (DE)
(74) Vertreter: Schober, Stefan

(56) Entgegenhaltungen:
- US-A- 3 844 364
- US-A- 3 971 450
- US-A- 4 727 942
- US-A- 5 048 981

## Beschreibung

Die Erfindung betrifft ein Maschinenelement mit Hydraulikfüllung, insbesondere Lager oder Welle, gemäß dem Oberbegriff des Patentanspruches 1.

Für bestimmte Anwendungsfälle, z.B. im Offshore-Bereich, ist es erforderlich, dass ein Maschinenelement mit Hydraulikfüllung unter Wasser eingesetzt und demzufolge dem Wasserdruck ausgesetzt wird. Bei großen Wassertiefen ergeben sich an den Dichtungen im Austrittsbereich des Maschinenelements aus dem Gehäuse große Differenzdrücke, die in einigen Fällen technisch von den Dichtungen nicht oder nur unvollkommen beherrschbar sind. Das führt dazu, dass Wasser in das Gehäuse eindringen kann und dieses sich mit dem darin eingefüllten Kühl- und/oder Schiermittel vermischt mit allen daraus sich ergebenden Folgen, wie Zusammenbruch des Schmierfilmes, Blasenbildung, Korrosion usw.

Zur Abhilfe dieses Problems war es bisher bekannt, das Gehäuse mit einer gefüllten Ausgleichsleitung zu verwenden, die bis oberhalb der Wasserlinie reicht. Da aber das spezifische Gewicht von Wasser und den üblichen Ölen für das Kohl- und/oder Schmiermittel verschieden ist, ergeben sich an der Dichtung weiterhin Differenzstücke, die bei sehr großen Wassertiefen problematisch sein können. Außerdem ist die Installation einer Ausgleichsleitung aufwendig, die je nach Änderung der Einsatztiefe zudem angepasst werden muss.

Aus dem US-Patent 5,048,981 ist eine Druckaufbauanordnung bekannt, mit der eine dichte, mit Schmieröl gefüllte Lageranordnung über einen verschiebbar angeordneten Stufenkolben gegenüber der Umgebung abgeschlossen ist. Auf die eine Seite des Stufenkolbens mit einer größeren Kolbenfläche wirkt der die Lageranordnung umgebende Atmosphärendruck und die daraus resultierende Kraft wirkt über eine Kolbenstange auf die andere Seite des Stufenkolbens, die eine kleinere Kolbenfläche aufweist. Die kleinere Kolbenfläche wirkt auf das in der Lageranordnung befindliche Schmieröl und erhöht dessen Druck gegenüber dem Umgebungsdruck.

Aufgabe der Erfindung ist es, ein Maschinenelement mit Hydraulikfüllung, insbesondere Lager oder Welle zu schaffen, das einfach Luft-Blasenfrei mit einer Hydraulikflüssigkeit befüllt werden kann.

Diese Aufgabe wird ausgehend vom Oberbegriff in Verbindung mit den im kennzeichnenden Teil angegebenen Merkmalen des Patentanspruches 1 gelöst. Vorteilhafte Ausgestaltungen sind Gegenstand der Unteransprüche.

Erfindungsgemäß weist das Gehäuse eine nach außen sich erstreckende offene Fortführung auf, in der ein Druckübertragungselement angeordnet ist. Dieses Druckabertragungselement kann vorzugsweise ein stangenloser Kolben oder eine Membran sein. Durch diese Anordnung wird erreicht, dass der in der jeweiligen Wassertiefe herrschende Druck mittels des Druckübertragungselementes auf das im Gehäuse sich befindende eingefüllte Kühl- und/oder Schmiermittel übertragen und somit die Dichtung entlastet wird. Von den Verlusten der Druckübertragung einmal abgesehen, ist im Idealfall die Druckdifferenz an der Dichtung gleich Null. Von Vorteil ist, dass dieses Prinzip unabhängig ist von der gewählten Einsatztiefe im Wasser.

In der Zeichnung wird das erfindungsgemäß ausgebildete Maschinenelement mit Hydraulikfüllung näher erläutert. Es zeigen:
- Figur 1: ein Prinzipbild eines erfindungsgemäß ausgebildeten Drucklagers
- Figur 2: im vergrößerten Maßstab das als Kolben ausgebildete Druckübertragungselement
- Figur 3: im vergrößerten Maßstab das als Membran ausgebildete Druckübertragungselement.

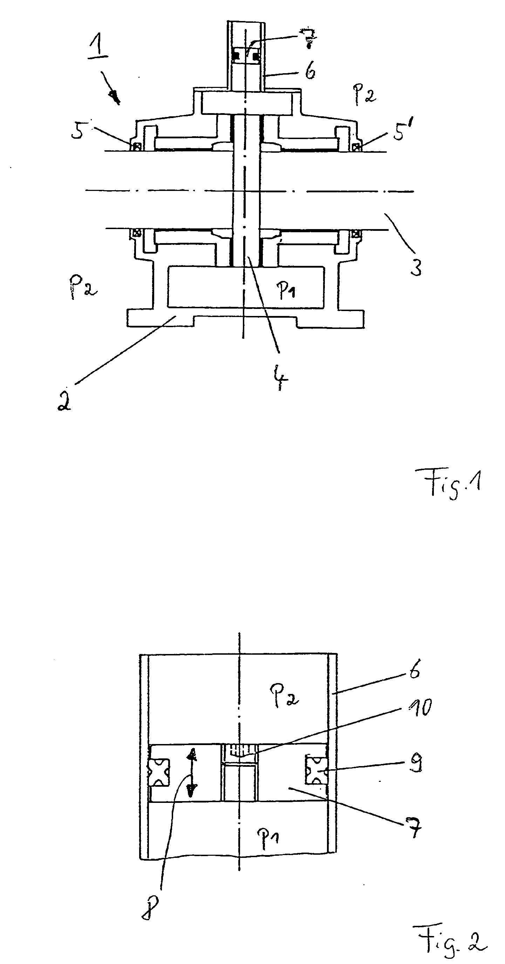

In Figur 1 ist als Prinzipbild ein erfindungsgemäß ausgebildetes Drucklager 1 dargestellt, das vorzugsweise unter Wasser im Offshore-Bereich eingesetzt wird. Es besteht aus einem Gehäuse 2, durch das beispielsweise eine Welle 3 mit einem Druckkamm 4 geführt ist. Die beiden Austrittsseiten der Welle 3 aus dem Gehäuse 2 sind je mit einer Dichtung 5,5' versehen. Der Innenraum des Gehäuses 2 ist mit einer Kühl- und/oder Schmierflüssigkeit gefüllt. Der Druck p1 beträgt beim Einfüllen Atmosphärendruck. Wird nun das Drucklager 1 in Wasser abgelassen, so steigt mit zunehmender Tiefe der Druck p2 an. Dieser wirkt auch auf die Dichtung 5, 5', so daß die Druckdifferenz p2 - p1 ist. Wird dieser Wert zu groß, dann kann Wasser von außen in das Gehäuse 2 eindringen und die Wirkung des eingefüllten Kühl- und/oder Schmiermittels beeinträchtigen. Erfindungsgemäß ist das Gehäuse 2 mit einer nach außen sich erstreckenden offenen Fortführung 6 versehen. In dieser Fortführung 6, die vorzugsweise als zylindrische Hülse ausgebildet ist. ist ein Druckübertragungselement angeordnet.

Figur 2 zeigt das Druckübertragungselement in vergrößerter Darstellung. In diesem Ausführungsbeispiel ist es als stangenloser Kolben 7 ausgebildet, der axial verschiebbar in der Fortführung 6 angeordnet ist. Die Verschiebbarkeit ist durch einen Doppelpfeil 8 gekennzeichnet. Die Abdichtung des Kolbens 7 erfolgt über ein Dichtelement 9. Damit beim Befüllen des Gehäuses 2 mit der Kühl- und/oder Schmierflüssigkeit in der Fortführung 6 unterhalb des Kolbens 7 keine Luftblasen sich ansammeln können, ist der Kolben 7 mit einer Entlüftungsschraube 10 versehen.

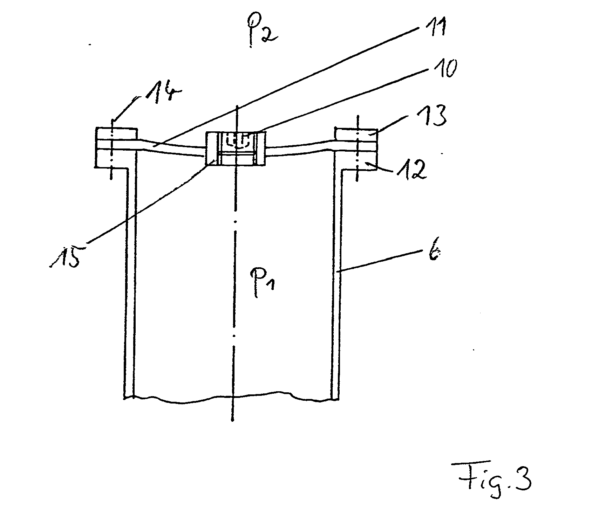

Figur 3 zeigt ein anderes Ausführungsbeispiel. In diesem Falle ist das Druckübertragungselement als Membran 11 ausgebildet. Diese Membran 11 schließt das offene Ende der Fortführung 6 ab und wird fixiert durch einen an der Fortführung 6 angeordneten Flansch 12 in Verbindung mit einem Haltering 13. Beide sind durch Befestigungselemente wie z. B. Schrauben 14 miteinander verbunden. Zur Anordnung der Entlüftungsschraube 10 weist die Membran 11 einen Gewindesatz 15 auf.

## Patentansprüche

1. Maschinenelement mit Hydraulikfüllung, insbesondere Lager oder Welle, das in einem mit Kühl- und/oder Schmiermittel gefüllten Gehäuse (2) angeordnet und dessen Austrittseite aus dem Gehäuse (2) mit mindestens einer Dichtung (5, 5') versehen ist, wobei das Gehäuse (2) eine nach außen sich erstreckende offene Fortführung (6) aufweist, in der ein Druckübertragungselement (7, 11) angeordnet ist, **dadurch gekennzeichnet, dass** das Druckübertragungselement (7,11) mit einer Entlüftung (10) versehen ist.

2. Maschinenelement mit Hydraulikfüllung nach Anspruch 1, **dadurch gekennzeichnet, dass** das Druckübertragungselement ein in der Fortführung (6) axial verschiebbarer und abgedichteter stangenloser Kolben (7) ist.

3. Maschinenelement mit Hydraulikfüllung nach Anspruch 1, **dadurch gekennzeichnet, dass** das Druckübertragungselement als eine das offene Ende der Fortführung (6) abschließende Membran (11) ausgebildet ist.

4. Maschinenelement mit Hydraulikfollung nach einem der Ansprüche 1 bis 3, **dadurch gekennzeichnet, dass** die Fortführung (6) eine zylindrische Hülse ist.

## Claims

1. A machine element with hydraulic filling, in particular a bearing or shaft, which is disposed in a housing (2) filled with coolant and/or lubricant and is provided at the side it emerges from the housing (2) with at least one seal (5, 5'), wherein the housing (2) has an outwardly extending open extension (6), in which a pressure transmission element (7, 11) is disposed, **characterized in that** the pressure transmission element (7, 11) is provided with a bleeding device (10).

2. A machine element with hydraulic filling according to claim 1, **characterized in that** the pressure transmission element is a rodless piston (7) that is sealed and axially displaceable in the extension (6).

3. A machine element with hydraulic filling according to claim 1, **characterized in that** the pressure transmission element takes the form of a diaphragm (11) that closes off the open end of the extension (6).

4. A machine element with hydraulic filling according to one of claims 1 to 3, **characterized in that** the extension (6) is a cylindrical sleeve.

## Revendications

1. Elément de machine à remplissage hydraulique, en particulier palier ou arbre tournant dans un carter (2) rempli de fluide de refroidissement et/ou de lubrifiant et dont le côté sortie hors du carter (2) est muni d'au moins un joint (5, 5'), le carter (2) présentant un prolongement (6) ouvert s'étendant vers l'extérieur dans lequel est disposé un élément de transmission de pression (7, 11),
**caractérisé en ce que**
l'élément de transmission de pression (7, 11) est muni d'un évent (10).

2. Elément de machine à remplissage hydraulique selon la revendication 1,
**caractérisé en ce que**
l'élément de transmission de pression est un piston (7) sans tige, étanche et axialement mobile dans le prolongement (6).

3. Elément de machine à remplissage hydraulique selon la revendication 1,
**caractérisé en ce que**
l'élément de transmission de pression a la forme d'une membrane (11) terminant l'extrémité ouverte du prolongement (6) .

4. Elément de machine à remplissage hydraulique selon l'une des revendications 1 à 3,
**caractérisé en ce que**
le prolongement (6) consiste en une douille cylindrique.
